# FASCICULE DE BREVET EUROPEEN

(11) **EP 1 127 777 B1**
(45) Date de publication et mention de la délivrance du brevet: **07.12.2005**
(21) Numéro de dépôt: 01400482.4
(22) Date de dépôt: 23.02.2001
(51) Int. Cl.: B62D 25/08, B62D 29/00, B62D 31/02

(54) **Module arrière pour véhicule automobile**
Endmodul für ein Kraftfahrzeug
Motor vehicle end module

(30) Priorité: 24.02.2000 FR 0002317
(43) Date de publication de la demande: 29.08.2001
(73) Titulaire: COMPAGNIE PLASTIC OMNIUM, 69007 Lyon (FR)
(72) Inventeur: Delavalle, Dominique, 01100 Marchon (FR); Rochon, Cyrille, 01100 Oyonnax (FR)
(74) Mandataire: Tanty, François

(56) Documents cités:
- EP-A- 0 270 097
- WO-A-99/12798
- DE-A- 19 913 532
- DE-C- 761 447

## Description

La présente invention concerne les éléments de structure des véhicules automobiles et, plus particulièrement, un élément de structure arrière.

Il est connu de réaliser des véhicules automobiles en assemblant sur une plate-forme divers éléments de structure destinés, notamment, à supporter des équipements tels que des éléments de carrosserie, un pare-chocs ou des optiques.

Pour varier le style de la partie arrière des véhicules, les soubassements de la plate-forme sont modifiés dans leur partie arrière.

Le fait de réaliser des soubassements différents complique la fabrication des véhicules et augmente leur prix de revient.

En outre, la partie arrière des véhicules automobiles connus est constituée par l'assemblage d'un nombre relativement élevé d'éléments de structure, ce qui se répercute sur les traitements de surface à effectuer et sur le temps et le nombre d'opérations nécessaires pour l'assemblage du véhicule.

Enfin, de nombreux éléments de structure de la partie arrière du véhicule sont assemblés par soudure, ce qui en cas de choc rend difficile leur remplacement et génère un coût de réparation relativement élevé.

On connaît par le brevet français FR-B-2 773 132 une structure de plancher pour véhicule automobile qui comporte un bac en matière plastique destiné à recevoir notamment une roue de secours. Ce bac est prolongé à l'arrière par une poutre qui sert de support à un bouclier arrière. La poutre est agencée pour prendre appui sur une traverse métallique fixée à chacune de ses extrémités aux parois latérales du véhicule. La présence de cette traverse métallique limite sensiblement les possibilités de modification du style de la partie arrière du véhicule. De plus, en cas de choc, la traverse peut être endommagée. La traverse n'étant pas prévue pour être démontée facilement, le coût de la réparation est relativement élevé.

La demande de brevet allemand DE 199 13 532 décrit un module arrière de véhicule automobile comprenant un cadre de renforcement sur lequel sont pré-assemblés des éléments, notamment un pare-chocs, un hayon, des optiques et une tôle de renforcement. Le module assemblé est mis en place sur la structure arrière du véhicule, étant notamment fixé aux longerons. Ce document couvre toutes les particularités de la revendication indépendante 1. En cas de choc, le cadre de renforcement peut être endommagé, auquel cas il doit être démonté avec tous les éléments qu'il supporte et remplacé par un nouveau cadre, entraînant ainsi une réparation complexe et coûteuse.

La demande WO 99/12798 décrit une partie arrière de véhicule automobile réalisée par moulage d'un seul tenant.

La présente invention a notamment pour objet de permettre à un constructeur automobile de standardiser les plates-formes sans que cela nuise à la diversité des styles offerts.

L'invention a également pour but de diminuer le coût d'une modification du style d'un véhicule.

L'invention a encore pour but de diminuer le coût de réparation, ainsi que le temps et le nombre d'opérations nécessaires à l'assemblage du véhicule.

L'invention a pour objet un module formant tout ou partie de l'extrémité arrière d'un véhicule automobile, étant apte à être rapporté sur les longerons et sur les parties latérales arrière du véhicule automobile, ce module comprenant au moins deux parties latérales démontables et étant agencé pour recevoir ou comportant déjà des équipements.

Ainsi, il est possible de ne remplacer qu'une partie seulement du module en cas d'endommagement partiel, l'une des deux parties latérales par exemple.

Les équipements précités sont par exemple choisis dans la liste suivante : poutre d'absorption de chocs, plancher, bouclier arrière, dispositifs de signalisation, éléments destinés à assurer l'étanchéité de l'habitacle du véhicule, éléments de verrouillage d'un ouvrant et éléments du système de remplissage du réservoir à carburant.

Il est notamment particulièrement avantageux que le module arrière comporte déjà un bouclier arrière lorsqu'il est monté sur le véhicule.

De préférence, le module comporte, outre les deux parties latérales, une partie centrale, les parties latérales étant assemblées sur cette partie centrale.

Avantageusement, les fixations entre la partie centrale et les parties latérales sont des fixations permettant un démontage aisé, ce qui est avantageux s'il est nécessaire de remplacer une partie du module suite à un choc.

De préférence, le module est dépourvu de soudures entre ses éléments constitutifs.

De préférence également, le module comporte des parties permettant sa fixation sans soudures sur les longerons et éventuellement sur les parties latérales arrière de la caisse du véhicule.

Dans une réalisation particulière, le module est solidaire d'un plancher, lequel peut être réalisé d'un seul tenant avec la partie centrale du module ou être constitué par un élément rapporté, la partie centrale du module et le plancher étant avantageusement livrés, dans ce dernier cas, à l'état assemblé au constructeur automobile.

Le module peut comporter des rallonges de longerons et/ou du plancher, ces rallonges pouvant être rapportées sur le reste du module.

Le plancher peut comporter, à l'état pré-assemblé, des garnitures du coffre du véhicule.

Le plancher peut également comporter des cavités permettant de ranger des accessoires et/ou la roue de secours.

Le plancher peut encore comporter des écrans thermiques et/ou sonores et des éléments destinés à la fixation d'équipements tels que le pot d'échappement ou le réservoir à carburant.

Dans une réalisation particulière, le module comporte des moyens de liaison rapportés ou intégrés, destinés à supporter des éléments de carrosserie voisins, par exemple une aile arrière.

Avantageusement, ces moyens de liaison sont agencés de manière à permettre de compenser des jeux d'accostage et/ou des dilatations différentielles des éléments de carrosserie.

Le module arrière incorpore avantageusement des logements destinés à recevoir ou à former une partie des optiques, notamment des optiques de signalisation.

Le module arrière peut comporter en outre des moyens permettant le montage d'un ouvrant arrière, pivotant autour d'un axe horizontal au voisinage de son bord inférieur.

Dans une réalisation particulière, le module comporte une face visible depuis l'intérieur du véhicule, ce qui permet d'éviter d'avoir à rapporter un élément d'habillage supplémentaire pour le couvrir.

Le module peut comporter sur sa face intérieure des éléments de décor spécifiques à un véhicule donné, de tels éléments de décor étant avantageusement livrés au constructeur pré-assemblés avec le module arrière.

Le module peut également comporter des canaux de guidage de fils électriques afin de faciliter, par exemple, la mise en place des optiques.

L'invention a également pour objet un nouveau procédé de fabrication d'un véhicule automobile, caractérisé par le fait qu'il comporte l'étape suivante :
- rapporter sur les longerons et sur les parties latérales arrière de la caisse du véhicule un module arrière structurel comportant un nombre réduit d'éléments constitutifs pré-assemblés, ce module arrière structurel formant tout ou partie de l'extrémité arrière de la structure du véhicule et étant destiné à recevoir ou supportant déjà des équipements, ledit module comprenant au moins deux parties latérales démontables.

Ces équipements sont par exemple choisis dans la liste suivante : poutre d'absorption de chocs, bouclier arrière, plancher, dispositifs de signalisation, éléments destinés à assurer l'étanchéité de l'habitacle du véhicule, éléments de verrouillage d'un ouvrant, éléments d'un système de remplissage du réservoir à carburant.

Lorsque le module comporte un plancher, le module et le plancher peuvent être pré-assemblés.

Grâce à invention, il est possible pour le constructeur automobile de standardiser ses plates-formes et de donner un style particulier par le choix du module arrière utilisé.

Ainsi, il est possible de diversifier les styles des véhicules à moindre investissement et à moindre coût, puisqu'il n'est pas nécessaire de modifier la plate-forme en fonction du module arrière à utiliser, les modules arrière étant agencés pour permettre leur fixation sur une plate-forme standard.

Le module arrière remplace notamment la traverse des plates-formes connues, lesquelles n'ont plus à comporter une traverse spécifique à un style de véhicule particulier.

En outre, de par le fait que le module arrière peut, grâce à sa structure, être livré déjà équipé à un constructeur, le temps et le nombre d'opérations nécessaires pour l'assemblage du véhicule sont diminués.

Le module arrière selon l'invention comporte un nombre réduit de pièces, de préférence moins de cinq et de préférence encore trois, à savoir une partie centrale et deux parties latérales.

D'autres caractéristiques et avantages de la présente invention ressortiront à la lecture de la description détaillée qui va suivre, d'exemples de réalisation non limitatifs et à l'examen du dessin annexé, sur lequel :
- la figure 1 est une vue schématique en perspective éclatée représentant un module arrière conforme à un premier exemple de mise en oeuvre de l'invention,
- la figure 2 illustre schématiquement et partiellement, en coupe, un moyen de fixation pouvant être utilisé pour l'assemblage d'une partie latérale et de la partie centrale du module,
- les figures 3 et 4 illustrent schématiquement et partiellement, en coupe transversale, deux exemples d'assemblage d'un pare-chocs sur un module arrière au moyen de rivets,
- la figure 5 illustre schématiquement et partiellement, en coupe, l'assemblage d'un module arrière et d'un élément de carrosserie.
- la figure 6 est une vue analogue à la figure 1 représentant un module arrière conforme à un deuxième exemple de mise en oeuvre de l'invention, et
- la figure 7 est une vue analogue à la figure 1 représentant un module arrière conforme à un troisième exemple de mise en oeuvre de l'invention.

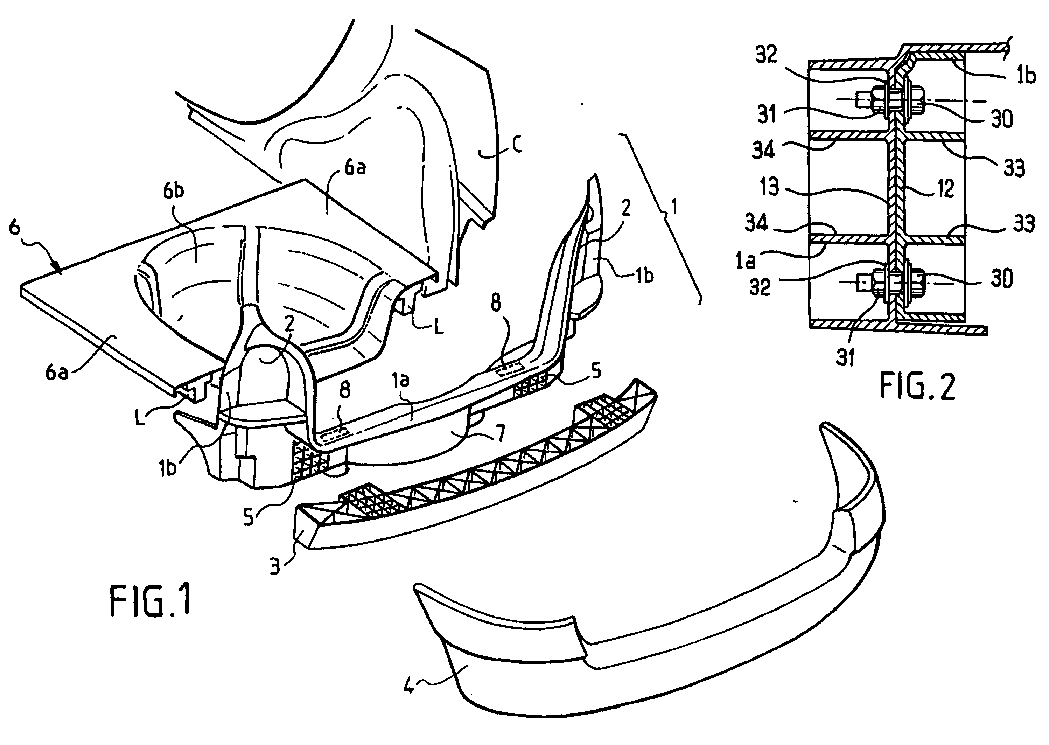

On a représenté sur la figure 1 un module arrière 1 réalisé dans l'exemple décrit par l'assemblage d'une partie centrale la et de deux parties latérales 1b.

La partie centrale la et les parties latérales 1b sont réalisées, dans l'exemple décrit, en matière thermoplastique renforcée.

On peut utiliser pour renforcer la matière thermoplastique un tissu de fibres de verre et/ou des inserts métalliques, par exemple.

La partie centrale la est assemblée avec les parties latérales 1b par des moyens de fixation autorisant un démontage aisé, et éventuellement un réglage du jeu.

Dans l'exemple décrit, chaque partie latérale 1b comporte une paroi 12 venant en appui sur une paroi 13 de la partie centrale la, ces parois 12 et 13 étant assemblées au moyen de vis 30 coopérant avec des écrous 31 surmontés par des rondelles 32, comme illustré à la figure 2.

Les parois 12 et 13 supportent des nervures de rigidification 33 et 34, respectivement.

En variante, on peut utiliser d'autres moyens de fixation adaptés à permettre un remplacement aisé de la partie centrale 1a ou d'une partie latérale 1b, en cas d'endommagement par un choc.

Le module arrière 1 est agencé, d'une manière générale, pour permettre sa fixation sur les longerons L et les parties latérales arrière de la caisse C du véhicule.

Dans l'exemple décrit, la fixation du module arrière 1 sur les longerons L s'effectue sans soudure, pour en faciliter le remplacement, par boulonnage par exemple.

Les longerons L appartiennent à une plate-forme standard.

On peut réaliser différents styles de véhicules à partir de cette plate-forme, en rapportant sur celle-ci des modules arrière de formes différentes.

Les parties latérales 1b comportent avantageusement, comme représenté, des logements 2 destinés à recevoir ou constituer une partie des optiques de signalisation, non représentées.

Le module arrière 1 forme la jupe arrière de la caisse du véhicule et remplace la traverse des plates-formes des véhicules connus tels que ceux décrits par exemple dans le brevet français FR-B-2 773 132 précité.

Le module arrière est agencé pour recevoir d'une part une poutre d'absorption de chocs 3 destinée à absorber l'énergie d'un choc, et d'autre part un bouclier arrière 4.

Le module arrière 1 comporte avantageusement, comme on peut le voir sur la figure 1, des structures alvéolaires 5 dont les parois s'étendent sensiblement dans l'axe des longerons L, destinées à transmettre les efforts exercés par la poutre 3 aux longerons L du véhicule.

Les parties latérales 1b sont conformées de manière à épouser la forme des parties latérales arrière de la caisse C lorsque le module arrière 1 est fixé sur les longerons L.

Dans l'exemple de réalisation décrit, ces parties latérales 1b sont également agencées pour être fixées sur les parties latérales arrière de la caisse C du véhicule.

Dans l'exemple de la figure 1, un plancher 6 est fixé sur les longerons L avant la mise en place du module arrière 1.

Le plancher 6 comporte deux parties latérales 6a reposant sur les longerons L et une cuvette centrale 6b constituant un logement pour recevoir, par exemple, la roue de secours ou une galette.

La partie centrale la comporte une paroi 7 qui complète la cuvette 6b lorsque le module arrière 1 est en place.

La paroi 7 peut être réalisée d'un seul tenant avec le reste du module 1 ou être rapportée sur celui-ci. La paroi 7 forme alors une rallonge de plancher 6 au sens de la présente invention.

La partie centrale la peut comporter des charnières 8, représentées très schématiquement en pointillés sur la figure 1, permettant le montage sur le module 1 d'un ouvrant, non représenté, apte à pivoter autour de son bord inférieur.

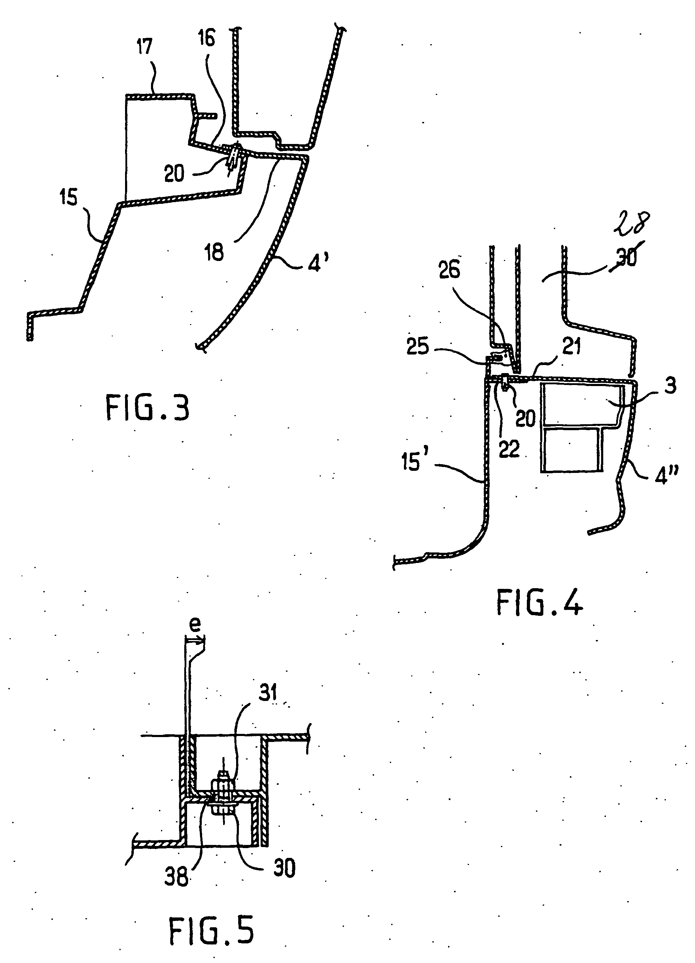

On va maintenant décrire en référence aux figures 3 et 4 deux exemples d'assemblage d'un pare-chocs sur un module arrière.

On a représenté sur la figure 3 l'assemblage d'un module arrière 15 et d'un bouclier 4' constituant un élément de carrosserie.

Le module 15 comporte un retour 17 présentant une paroi 16 sur laquelle vient en appui un retour 18 du bouclier 4' formé à sa partie supérieure.

La fixation du bouclier 4' sur le module arrière 15 est réalisée au moyen de rivets 20 mis en place à travers le retour 18 et la paroi 16.

On a représenté sur la figure 4 une variante d'assemblage d'un module 15' et d'un bouclier 4".

Le module 15' comporte un rebord 22 dirigé vers l'extérieur du véhicule et formant une surface d'appui pour le montage d'un retour 21 formé à la partie supérieure du bouclier 4".

La fixation du bouclier 4" sur le module 15' est réalisée au moyen de rivets 20, à l'instar de l'assemblage décrit précédemment.

Le module 15' comporte également une nervure 25 supportant un joint d'étanchéité 26 contre lequel le hayon 28 du véhicule peut venir en appui.

Le bouclier 4" recouvre une poutre d'absorption de chocs 3 fixée sur le module 15' par des moyens de fixation non représentés.

On peut fixer les différents équipements, notamment le bouclier, sur le module arrière par tout autre moyen de fixation que des rivets, par des vis par exemple.

Les différents éléments du modèle arrière, notamment la partie centrale et l'une des parties latérales ou un élément fixé sur l'une des parties centrale et latérales, peuvent être maintenus ensemble à l'aide de moyens de fixation permettant un réglage du jeu.

A titre d'exemple, on a représenté sur la figure 5 un assemblage permettant un tel réglage de jeu, comportant une vis 30 engagée dans un trou oblong 38 et coopérant avec un écrou 31.

La présence du trou oblong permet de régler le jeu e entre les deux éléments assemblés.

Bien entendu, l'invention n'est pas limitée aux exemples de réalisation qui viennent d'être décrits.

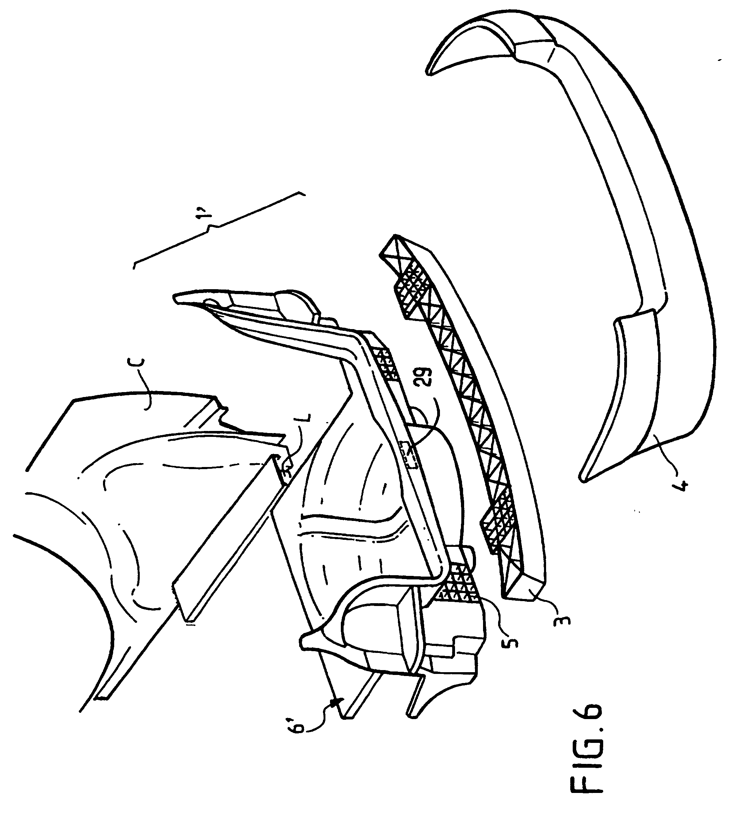

A titre d'exemple, on a représenté sur la figure 6 un module arrière 1' qui diffère du module arrière 1 précédemment décrit par le fait qu'il est livré au constructeur à l'état pré-assemblé avec un plancher 6'.

Le plancher 6' peut être réalisé, en variante, d'un seul tenant par moulage de matière thermoplastique ou thermodurcissable avec la partie centrale du module arrière 1'.

On peut, sans sortir du cadre de la présente invention, pré-assembler sur le module arrière livré au constructeur un grand nombre d'équipements et/ou d'éléments de carrosserie.

On peut ainsi pré-assembler par exemple sur le plancher arrière des garnitures du coffre ou des écrans thermiques et/ou sonores.

On peut encore équiper le module 1' avec un élément de verrouillage d'un ouvrant 29, représenté en pointillés sur la figure 6.

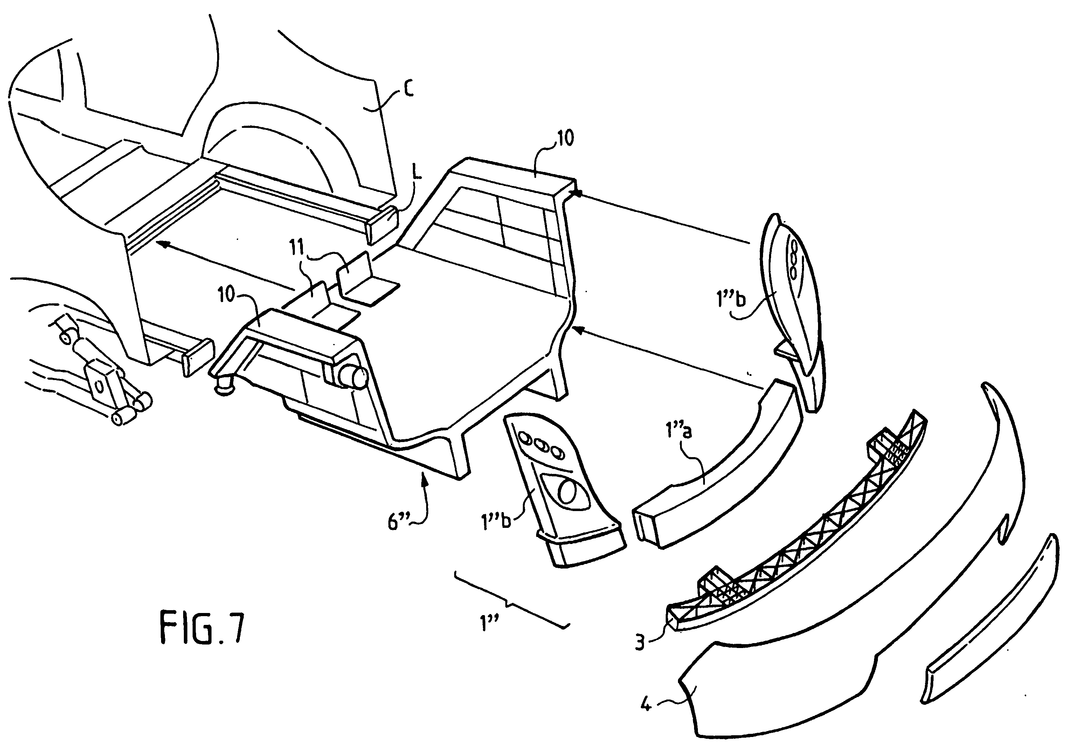

On a représenté sur la figure 7 un module arrière 1" comportant une partie centrale 1"a et deux parties latérales 1"b, la partie centrale 1" étant destinée à être fixée aux longerons L et à un plancher 6", lequel est pré-assemblé notamment avec des garnissages de passages de roues 10 et des trappes 11 de rangement d'accessoires.

Le module arrière 1" est destiné à recevoir une poutre d'absorption de chocs 3 et un bouclier arrière 4.

## Revendications

1. Module (1 ; 1' ; 1"; 15 ; 15') formant tout ou partie de l'extrémité arrière d'un véhicule automobile, **caractérisé par le fait qu'**il est apte à être rapporté sur les longerons (L) et sur les parties latérales arrière du véhicule automobile, ce module comprenant au moins deux parties latérales démontables (1b; 1"b) et étant agencé pour recevoir ou comportant déjà des équipements.

2. Module selon la revendication précédente, **caractérisé par le fait que** lesdits équipements sont choisis dans la liste suivante : poutre d'absorption de chocs, plancher, bouclier arrière, dispositifs de signalisation, éléments destinés à assurer l'étanchéité de l'habitacle du véhicule, éléments de verrouillage d'un ouvrant et éléments du système de remplissage du réservoir de carburant.

3. Module selon la revendication précédente, **caractérisé par le fait que** lesdits équipements comprennent un bouclier (4 ; 4' ; 4").

4. Module selon l'une quelconque des revendications précédentes, **caractérisé par le fait qu'**il comporte outre les deux parties latérales (1b ; 1"b) une partie centrale (la ; 1"a), les parties latérales étant assemblées sur la partie centrale.

5. Module selon la revendication précédente, **caractérisé par le fait que** les fixations (30, 31) entre la partie centrale (1a ; 1"a) et les parties latérales (16 ; 1"b) sont des fixations permettant un démontage aisé.

6. Module selon l'une quelconque des revendications précédentes, **caractérisé par le fait qu'**il est dépourvu de soudures entre ses éléments constitutifs.

7. Module selon l'une quelconque des revendications précédentes, **caractérisé par le fait qu'**il comporte des parties permettant sa fixation sans soudure sur les longerons (L) du véhicule.

8. Module selon l'une quelconque des revendications précédentes, **caractérisé par le fait qu'**il est solidaire d'un plancher (6 ; 6' ; 6").

9. Module selon la revendication précédente, le module comportant une partie centrale, **caractérisé par le fait que** le plancher et la partie centrale sont réalisés d'un seul tenant.

10. Module selon l'une des deux revendications précédentes, **caractérisé par le fait qu'**il comporte des rallonges de longerons et/ou du plancher.

11. Module selon la revendication précédente, **caractérisé par le fait que** lesdites rallonges sont rapportées sur le reste du module.

12. Module selon l'une quelconque des revendications 8 à 11, **caractérisé par le fait que** le plancher (6) comporte une ou plusieurs cavités (6b).

13. Module selon l'une quelconque des revendications précédentes, **caractérisé par le fait qu'**il comporte des moyens de liaisons rapportés ou intégrés, destinés à supporter des éléments de carrosserie.

14. Module selon la revendication précédente, **caractérisé par le fait que** les moyens de liaisons (20 ; 30 ; 31) sont agencés de manière à permettre de compenser des jeux d'accostage et/ou de dilatations différentielles d'éléments de carrosserie.

15. Module selon l'une quelconque des revendications précédentes, **caractérisé par le fait qu'**il comporte des logements (2) destinés à recevoir ou former une partie des optiques, notamment des optiques de signalisation.

16. Module selon l'une quelconque des revendications précédentes, **caractérisé par le fait qu'**il comporte des moyens (8) permettant le montage d'un ouvrant arrière pivotant autour d'un axe horizontal au voisinage de son bord inférieur.

17. Module selon l'une quelconque des revendications précédentes, **caractérisé par le fait qu'**il comporte une face visible depuis l'intérieur du véhicule.

18. Procédé de fabrication d'un véhicule automobile, **caractérisé par le fait qu'**il comporte l'étape suivante :
- rapporter sur les longerons (L) et sur les parties latérales arrière de la caisse (C) du véhicule un module arrière structurel (1 ; 1' ; 1") comportant un nombre réduit d'éléments constitutifs pré-assemblés, ce module arrière structurel (1 ; 1' ; 1") formant tout ou partie de l'extrémité arrière de la structure du véhicule et étant destiné à recevoir ou supportant déjà des équipements, ledit module comprenant au moins deux parties latérales démontables.

19. Procédé selon la revendication 18, **caractérisé par le fait que** lesdits équipements sont choisis dans la liste suivante : poutre d'absorption de chocs (3), plancher (6 ; 6' ; 6"), bouclier arrière (4), dispositifs de signalisation, éléments destinés à assurer l'étanchéité de l'habitacle du véhicule (26), éléments de verrouillage d'un ouvrant (29), éléments d'un système de remplissage du réservoir de carburant.

20. Procédé selon la revendication précédente, le module comportant un plancher (6'), **caractérisé par le fait que** le module arrière (1') et le plancher (6') sont pré-assemblés.

## Patentansprüche

1. Modul (1; 1'; 1"; 15; 15') das gänzlich oder teilweise den hinteren Endbereich eines Kraftfahrzeugs bildet, **dadurch gekennzeichnet, dass** es geeignet ausgebildet ist auf die Hauptträger (L) und auf hintere Seitenteile des Kraftfahrzeugs angebracht zu werden, wobei dieses Modul zumindest zwei demontierbare Seitenteile (1b; 1"b) aufweist und ausgebildet ist, Ausrüstungsgegenstände aufzunehmen oder schon aufzuweisen.

2. Modul nach dem vorangegangenen Anspruch, **dadurch gekennzeichnet, dass** die erwähnten Ausrüstungsgegenstände ausgewählt sind aus der folgenden Liste: Stoßfänger bzw. Stoßabsorber, Bodenteil, hinteres Schild, Signalisierungsmittel, Elemente die dazu bestimmt sind, die Dichtheit des Fahrgastraums des Kraftfahrzeugs zu gewährleisten, Elemente zum Verriegeln eines Deckels bzw. einer Klappe und Elemente des Füllsystems eines Kraftstoffbehälters.

3. Modul nach dem vorangegangenen Anspruch, **dadurch gekennzeichnet, dass** die erwähnten Ausrüstungsgegenstände ein Schild (4; 4'; 4") aufweisen.

4. Modul nach einem beliebigem der vorangegangenen Ansprüche, **dadurch gekennzeichnet, dass** es neben den zwei Seitenteilen (1b; 1"b) einen Zentralbereich (1a; 1"a) aufweist, wobei die Seitenteile an den Zentralbereich montiert sind.

5. Modul nach dem vorangegangenen Anspruch, **dadurch gekennzeichnet, dass** die Befestigungsmittel (30, 31) zwischen dem Zentralbereich (1a; 1"a) und den Seitenteilen (1b; 1"b) Fixierungsmittel sind, die eine einfache Demontage ermöglichen.

6. Modul nach einem beliebigem der vorangegangenen Ansprüche, **dadurch gekennzeichnet, dass** keine Schweiß- bzw. Lötverbindungen zwischen den konstitutiven Elementen vorgesehen sind.

7. Modul nach einem beliebigem der vorangegangenen Ansprüche, **dadurch gekennzeichnet, dass** es Einrichtungen aufweist, die seine Befestigung ohne Schweißen auf den Hauptträgern (L) des Kraftfahrzeugs ermöglichen.

8. Modul nach einem beliebigem der vorangegangenen Ansprüche, **dadurch gekennzeichnet, dass** es mit einem Bodenteil (6; 6'; 6") zusammenhängt.

9. Modul nach dem vorangegangenen Anspruch, wobei das Modul einen Zentralbereich aufweist, **dadurch gekennzeichnet, dass** das Bodenteil und der Zentralbereich einstückig zusammenhängen.

10. Modul nach einem der beiden vorangegangenen Ansprüche, **dadurch gekennzeichnet, dass** es Verlängerungen der Hauptträger und/oder des Bodenteils aufweist.

11. Modul nach dem vorangegangenen Anspruch, **dadurch gekennzeichnet, dass** die erwähnten Verlängerungen an dem Rest des Moduls angeordnet sind.

12. Modul nach einem beliebigen der Ansprüche 8 bis 11, **dadurch gekennzeichnet, dass** das Bodenteil (6) eine oder mehrere Ausnehmungen (6b) aufweist.

13. Modul nach einem beliebigem der vorangegangenen Ansprüche, **dadurch gekennzeichnet, dass** es angebrachte oder integrierte Befestigungsmittel aufweist, die dazu bestimmt sind, Karosserieelemente zu tragen.

14. Modul nach dem vorangegangenen Anspruch, **dadurch gekennzeichnet, dass** die Befestigungsmittel (20; 30; 31) derart ausgebildet sind, dass sie Montagespiel und/oder Ausdehnungsdifferenzen der Karosserieelemente aufnehmen können.

15. Modul nach einem beliebigem der vorangegangenen Ansprüche, **dadurch gekennzeichnet, dass** es Aufnahmemittel (2) aufweist, die bestimmt sind für die Aufnahme oder die Ausbildung eines Teils der optischen Mittel, insbesondere Mittel der optischen Signalisierung.

16. Modul nach einem beliebigem der vorangegangenen Ansprüche, **dadurch gekennzeichnet, dass** es Mittel (8) aufweist, die das Montieren einer hinteren Klappe ermöglichen, welche um eine horizontale Achse in Nähe ihres unteren Randes schwenkt.

17. Modul nach einem beliebigem der vorangegangenen Ansprüche, **dadurch gekennzeichnet, dass** es eine Fläche aufweist, die vom Inneren des Fahrzeuges sichtbar ist.

18. Verfahren zur Herstellung eines Kraftfahrzeugs, **dadurch gekennzeichnet, dass** es den folgenden Schritt aufweist:
- Anbringen auf den Hauptträgern (L) und auf den hinteren Seitenteilen der Struktur bzw. des Wagenkastens (C) des Kraftfahrzeugs eines hinteren strukturellen Moduls (1; 1'; 1"), das eine reduzierte Anzahl von vormontierten, konstitutiven, Elementen aufweist, wobei dieses hintere strukturelle Modul (1; 1'; 1") gänzlich oder teilweise den hinteren Bereich der Struktur des Kraftfahrzeuges ausbildet und bestimmt ist, Ausrüstungsgegenstände aufzunehmen oder schon zu tragen, wobei dieses Modul zumindest zwei demontierbare Seitenteile hat.

19. Verfahren nach Anspruch 18, **dadurch gekennzeichnet, dass** die erwähnten Ausrüstungsgegenstände ausgewählt sind aus der folgenden Liste: Stoßfänger bzw. Stoßabsorber (3), Bodenteil (6; 6'; 6"), hinteres Schild (4), Signalisierungsmittel, Elemente, die dazu bestimmt sind, die Dichtheit des Fahrgastraums des Kraftfahrzeugs (26) zu gewährleisten, Elemente zum Verriegeln eines Deckels bzw. einer Klappe (29) und Elemente eines Füllsystems des Kraftstoffbehälters.

20. Verfahren nach dem vorangegangenen Anspruch, wobei das Modul ein Bodenteil (6') aufweist, **dadurch gekennzeichnet, dass** das hintere Modul (1') und das Bodenteil (6') vormontiert sind.

## Claims

1. A module (1; 1'; 1"; 15; 15') forming all or part of the rear end of a motor vehicle, the module being **characterized by** the fact that it is suitable for being fitted to the side rails (L) and to the rear side portions of the motor vehicle, said module comprising at least two releasable side portions (1b; 1"b) and being arranged to receive or already including items of equipment.

2. A module according to the preceding claim,
**characterized by** the fact that said equipment is selected from the following list: an impact-absorber beam; a floor; a rear shield; signaling devices; elements for sealing the vehicle cabin; elements for locking a door; and elements of the system for filling the fuel tank.

3. A module according to the preceding claim,
**characterized by** the fact that said items of equipment comprise a shield (4; 4'; 4").

4. A module according to any preceding claim,
**characterized by** the fact that in addition to the two side portions (1b; 1"b), the module further includes a central portion (1a; 1"a), with the side portions being assembled to the central portion.

5. A module according to the preceding claim,
**characterized by** the fact that the fastenings (30, 31) between the central portion (1a; 1"a) and the side portions (1b; 1"b) are fastenings that are easily undone.

6. A module according to any preceding claim,
**characterized by** the fact that it has no welds between its component elements.

7. A module according to any preceding claim,
**characterized by** the fact that it includes portions that enable it to be fastened without welding to the side rails (L) of the vehicle.

8. A module according to any preceding claim,
**characterized by** the fact that it is secured to a floor (6; 6'; 6").

9. A module according to the preceding claim, the module including a central portion and being **characterized by** the fact that the floor and the central portion are made as a single piece.

10. A module according to either one of the two preceding claims, **characterized by** the fact that it includes extenders for the side rails and/or the floor.

11. A module according to the preceding claim,
**characterized by** the fact that said extenders are fitted to the remainder of the module.

12. A module according to any one of claims 8 to 11,
**characterized by** the fact that the floor (6) has one or more cavities (6b).

13. A module according to any preceding claim,
**characterized by** the fact that it includes fitted or integral link means for supporting elements of bodywork.

14. A module according to the preceding claim,
**characterized by** the fact that the link means (20; 30; 31) are arranged in such a manner as to enable docking tolerances and/or differential expansion of bodywork elements to be accommodated.

15. A module according to any preceding claim,
**characterized by** the fact that it includes housings (2) for receiving or forming portions of light inserts, in particular signaling light inserts.

16. A module according to any preceding claim,
**characterized by** the fact that it includes means (8) enabling a rear door to be mounted to pivot about a horizontal axis in the vicinity of its bottom edge.

17. A module according to any preceding claim,
**characterized by** the fact that it includes a face that is suitable for inside the vehicle.

18. A method of manufacturing a motor vehicle, the method being **characterized by** the fact that it includes the following step:
- fitting a structural rear module (1; 1'; 1") to the side rails (L) and to the rear side portions of the vehicle body (C), said structural rear module (1; 1'; 1") comprising a small number of preassembled component elements, forming all or part of the rear end of the vehicle structure, and being designed to receive or already supporting items of equipment, said module comprising at least two releasable side portions.

19. A method according to claim 18, **characterized by** the fact that said items of equipment are selected from the following list: an impact-absorbing beam (3); a floor (6; 6'; 6"); a rear shield (4); signaling devices; elements for providing sealing for the vehicle cabin (26); elements for locking a door (29); and elements of a system for filling the fuel tank.

20. A method according to the preceding claim, the module including a floor (6'), and the method being
**characterized by** the fact that the rear module (1') and the floor (6') are preassembled.
